# EUROPEAN PATENT APPLICATION

(11) **EP 1 647 856 A1**
(43) Date of publication of application: **19.04.2006**
(21) Application number: 05003281.2
(22) Date of filing: 16.02.2005
(51) Int. Cl.: G02F 1/13357, G09G 3/34

(54) **Method and structure for driving a planar light source apparatus**

(30) Priority: 14.10.2004 CN 200410088125
(71) Applicant: Coretronic Corporation, Chu-Nan 350, Miao-Li County (TW)
(72) Inventor: Kuo, Tzu-Shou, Chu-Nan 350, Miao-Li County (TW); Hsiao, Der-Woei, Chu-Nan 350 Miao-Li County (TW)
(74) Representative: TER MEER - STEINMEISTER & PARTNER GbR

(57) **Abstract**

A method and structure for driving a planar light source apparatus, wherein each electrode position of each illuminating dot on the planar light source unit is rearranged. The electrodes are sequentially driven to illuminate the illuminating dots according to the scanning display sequence of the LCD. The full region illuminating method is changed to a sequential illuminating method, in order to operate in coordination with the scanning sequence of a LCD for eliminating the shadow phenomenon.

## Description

### FIELD OF THE INVENTION

The present invention relates to a method and structure for driving a planar light source apparatus, and more particularly to a method and structure for driving a planar light source apparatus for a liquid crystal display.

### BACKGROUND OF THE INVENTION

Recently, owing to the development of portable electronic products and the communication industry, liquid crystal displays grow up substantially. A display made from liquid crystal is called a liquid crystal display, or a LCD. LCDs are classified according to driving methods, including the static driving, the simple matrix driving and the active matrix driving. The active TFT-type LCD has a more complicated structure, generally including backlight tubes, a light-guiding plate, a polarizer, a filter, a glass base, a directing film, a liquid crystal material and TFTs. In a TFT-type LCD, net-shape tiny circuits are disposed on a conducting glass, and electrodes are switch arrays arranged by TFT transistors. A control switch is disposed at each intersection of circuits, and the control switch of each display dot operates in coordination with the driving signal. The transistor arrays on the electrodes turn on or turn off the voltages of the liquid crystal molecules. In short, the display signals proceed a switching operation on the switch arrays, and rotate the axis of the liquid crystal molecules to form a contrast of brightness or darkness.

Because of the difference in principle of forming images, a LCD has better definition, stability and lower power consumption than a CRT. But the liquid crystal material is so viscous that images need longer response time, resulting the shadow phenomenon.

The shadow phenomenon means that when pictures switch, the previous picture does not disappear immediately but gradually. The shadow phenomenon and the response time cannot be regarded in the same frame of mind. The shadow might take two or three seconds to disappear completely, but the response time of the liquid crystal is from ten to less than a hundred milliseconds. A well-designed LCD does not has the shadow phenomenon even it has a 15~35ms response time. The mechanism of the shadow phenomenon is complicated and often occurs because of the situation that a same picture is displayed so long that charged ions in the liquid crystal are attached on the upper and lower glasses, forming a built-in electric field. When pictures switch, these ions are not released immediately, causing liquid crystal molecules not rotated to an angle that ought to be.

The scanning methods of a display device are divided into two ways: "scanning line by line" and "scanning the second next line". If the scanning system scans only odd (even) lines when scanning horizontally and even (odd) lines when scanning vertically, the display device adopting such method is called a "scanning the second next line" display device. Although such display devices are cheaper, human eyes can see the glitters and feel tired after using for a long time, therefore such display devices are eliminated. "Scanning line by line" method solves the shortcomings mentioned above, which scans line by line while scanning horizontally or vertically, without the difference between odd lines and even lines. Scanning line by line makes the glitters fall to a minimum and human eyes feel no tiredness even for a long time.

Because the backlight of the conventional LCD illuminates in a full region way, which does not completely correspond to the scanning sequence of a LCD, and is hard to eliminate the shadow phenomenon mentioned above. In addition, the inverter for driving the backlight unit is designed on the basis of a full region illumination, resulting in high costs.

### SUMMARY OF THE INVENTION

One object of the present invention is to provide a method for driving a planar light source in order to eliminate the shadow phenomenon.

The method disclosed in the present invention includes: a method for relocating the illuminating dots on the planar light source unit, a method for sequentially driving the illuminating dots on different locations or regions according to the scanning display sequence of a LCD. For attaining the methods mentioned above, the full region illuminating method in the conventional planar light source is changed to a sequential illuminating method, in order to operate in coordination with the scanning sequence of a LCD for eliminating the shadow phenomenon.

Another object of the present invention is to improve the structure for driving a planar light source, and provide a driving device for lowering the designed power rate of the inverter.

For attaining the object mentioned above, electrode positions of each illuminating dot in the planar light source are rearranged, and the electrodes are sequentially driven to illuminate the illuminating dots according to the scanning sequence of the LCD for changing the full region illumination to the sequential illumination, and then lowering the designed power rate of the inverter.

Preferred embodiments and detailed techniques about the invention are illustrated accompanied with drawings in the following.

### BRIEF DESCRIPTION OF THE DRAWINGS

Fig. 1 is a function block diagram of the present invention.
Fig. 2 is a structure diagram of the preferred embodiment for the planar light source unit of the present invention.
Fig. 3-1 is a plan diagram of the planar light source unit of the present invention, showing the first preferred embodiment of distribution of each illuminating dot of the planar light source unit.
Fig. 3-2 is an illuminating sequence diagram of Fig. 3-1.
Fig. 4-1 is a plan diagram of the planar light source unit of the present invention, showing the second preferred embodiment of distribution of each illuminating dot of the planar light source unit.
Fig. 4-2 is an illuminating sequence diagram of Fig. 4-1.
Fig 5-1 is a plan diagram of the planar light source unit of the present invention, showing the third preferred embodiment of distribution of each illuminating dot of the planar light source unit.
Fig. 5-2 is an illuminating sequence diagram of Fig. 5-1.
Fig 6-1 is a plan diagram of the planar light source unit of the present invention, showing the fourth preferred embodiment of distribution of each illuminating dot of the planar light source unit.
Fig. 6-2 is an illuminating sequence diagram of Fig. 6-1.

### DETAILED DESCRIPTION OF THE PREFERRED EMBODIMENT

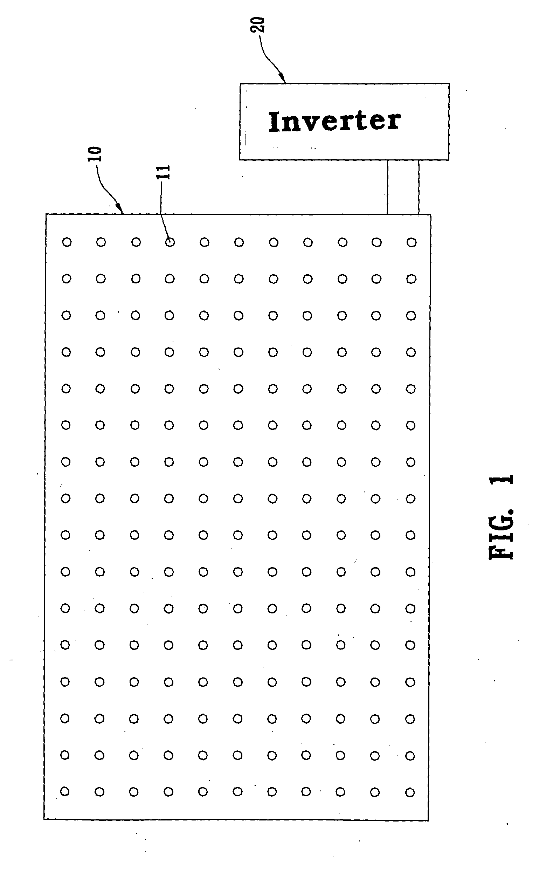

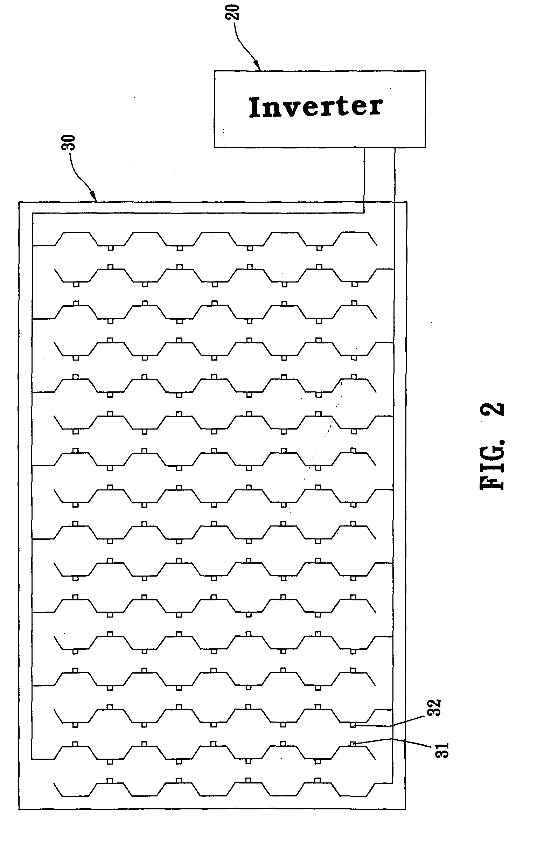

Please refer to Fig. 1, which is a function block diagram for the planar light source of the present invention, including a planar light source unit 10 preferably fulfilled by distributing a plurality of illuminating dots on the illuminating region. Using a LED planar light source can fulfill the illuminating dots. In the preferred embodiment of the present invention, a planar gas-discharging lamp 30 (see Fig. 2) is chosen, and a similar technique can be referred in the Taiwan Pat. No.521300, "A discharging lamp for dielectric blocking discharge having a supporting element between the lower plate and the cover plate". The basic structure is that, two pieces of glass form a hollow plate with a sealed chamber inside, and an inert gas fills the sealed chamber, wherein the surface located at the inside of the front glass plate on the illuminating side and facing the chamber has a fluorescent material. Besides, the rear glass surface on the backside of illumination is distributed with an electrode matrix. Such electrode matrix is arranged by a plurality of pairs of a positive electrode 31 and a negative electrode 32 in a matrix shape, and any pair of a positive electrode 31 and a negative electrode 32 belongs to a dot light source. A driving unit 20 is connected with the positive electrode 31 and the negative electrode 32 and supplies the operation power needed. The driving unit can be an inverter, an electronic control gear, or electronic ballast and so on. The potential difference between the positive electrode 31 and the negative electrode 32 enables the inert gas to discharge electricity, and then excite the fluorescent material to illuminate and emit through the front glass plate of the illumination side.

According to the method disclosed herein, each illuminating dot of the planar light source unit 10 is rearranged, and each illuminating dot includes a positive electrode 31 and a negative electrode 32. According to the scanning display sequence of LCD, the electrodes (positive electrodes 31 and negative electrodes 32) are driven to illuminate the illuminating dots, and thereby change the full region illuminating way in the conventional planar light source to a sequential illuminating way. Such electrode matrix is arranged by a plurality of pairs of a positive electrode 31 and a negative electrode 32 in a matrix shape, wherein each positive electrode 31 of each illuminating region is connected to a driving unit 20 together, and each negative electrode 32 is also connected to a driving unit 20 together.

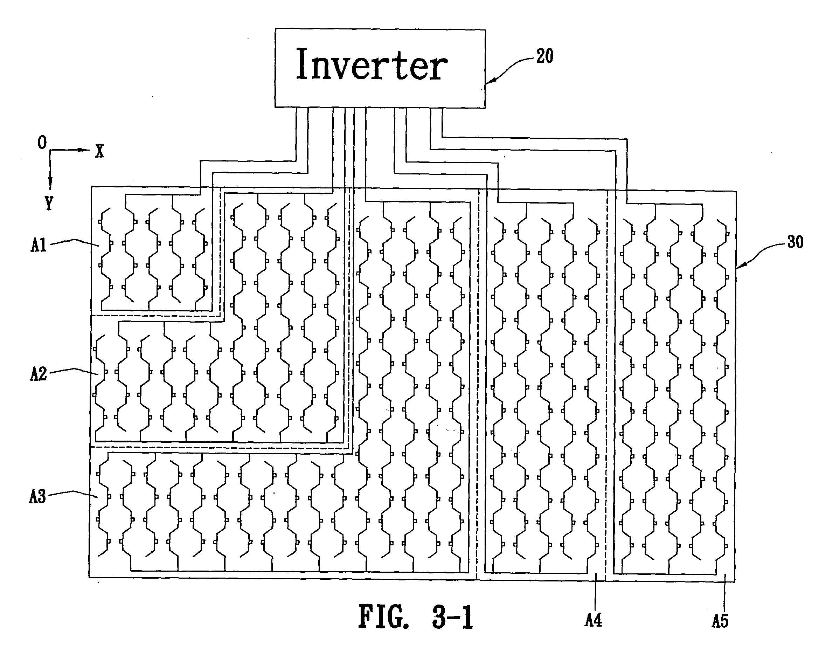

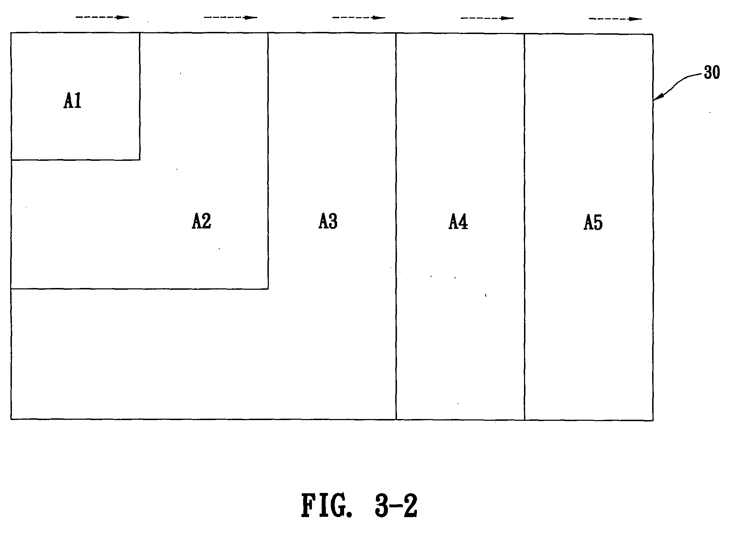

Fig. 3-1 shows the first preferred embodiment of the planar light source unit 10 of the invention. The scanning display sequences of a LCD includes scanning horizontally (the x-axis direction in the figure) and scanning vertically (the y-axis direction in the figure), hence, in the invention the planar illuminating region is divided into several regions, and though there are five illuminating regions A1~A5 for example in this embodiment, the invention is not limited to this embodiment. These illuminating regions A1~A5 are centered on a corner point of the planar illuminating region (preferred to be the scanning starting point O in the x-y axis), and are divided one by one in the direction facing the opposite corner. Each illuminating region A1~A5 is respectively driven to illuminate by the driving unit 20. According to the scanning display sequence of the LCD, the illuminating regions A1~A5 are repeatedly driven to illuminate in the sequence of A1, A2, A3, A4 and A5 (as in the Fig. 3-2).

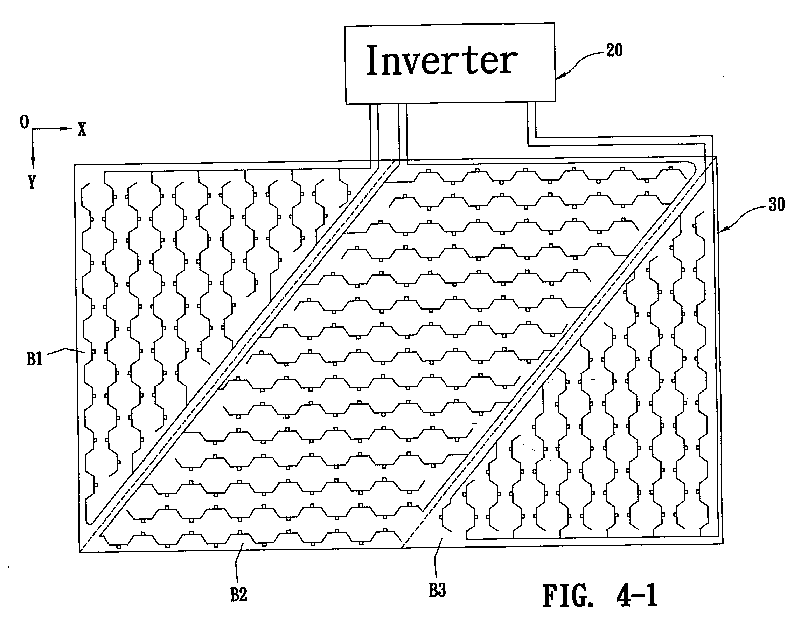

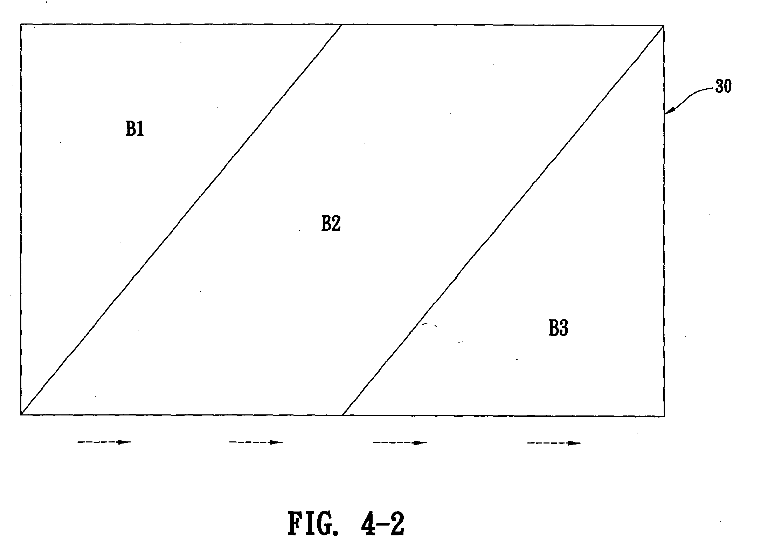

Fig. 4-1 shows the second preferred embodiment of the planar light source unit 10 of the invention. In this embodiment, there are several illumination regions B1~B3 along the x-axis direction, and these regions are also separately driven to illuminate by the driving unit 20. Besides, according to the scanning display sequence of the LCD, the illuminating regions B1~B3 are repeatedly driven to illuminate in the sequence of B1, B2 and B3 (as in Fig. 4-2).

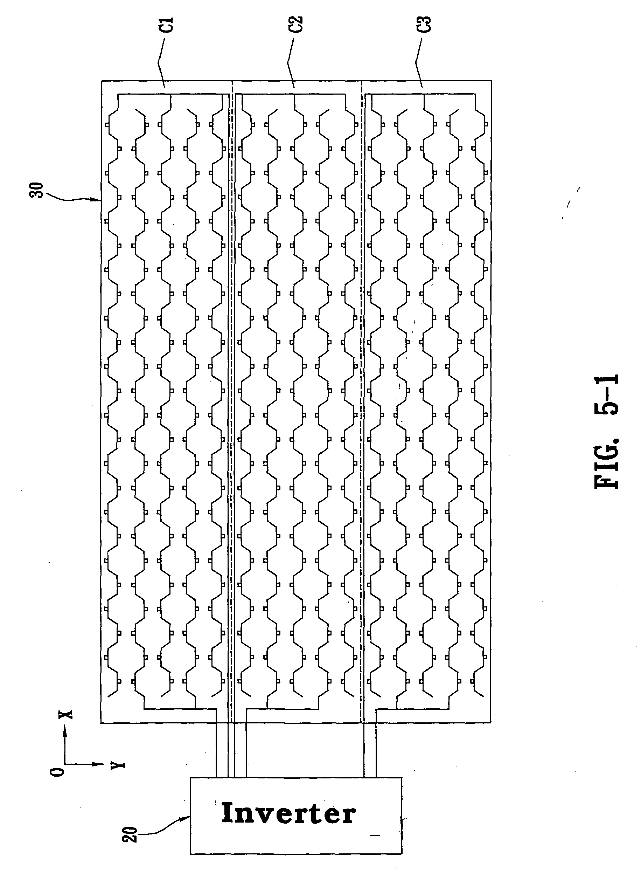

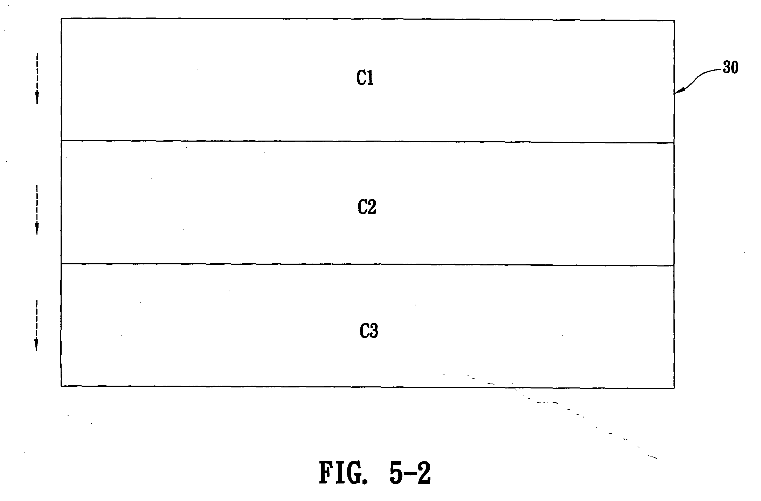

Fig. 5-1 shows the third preferred embodiment of the planar light source unit 10 of the invention. In this embodiment, there are several illumination regions C1~C3 from the scanning starting point O along the y-axis direction. These regions are also separately driven to illuminate by the driving unit 20, besides, according to the scanning display sequence of the LCD, the illuminating regions C1~C3 are repeatedly driven to illuminate in the sequence of C1, C2 and C3 (as in Fig. 5-2).

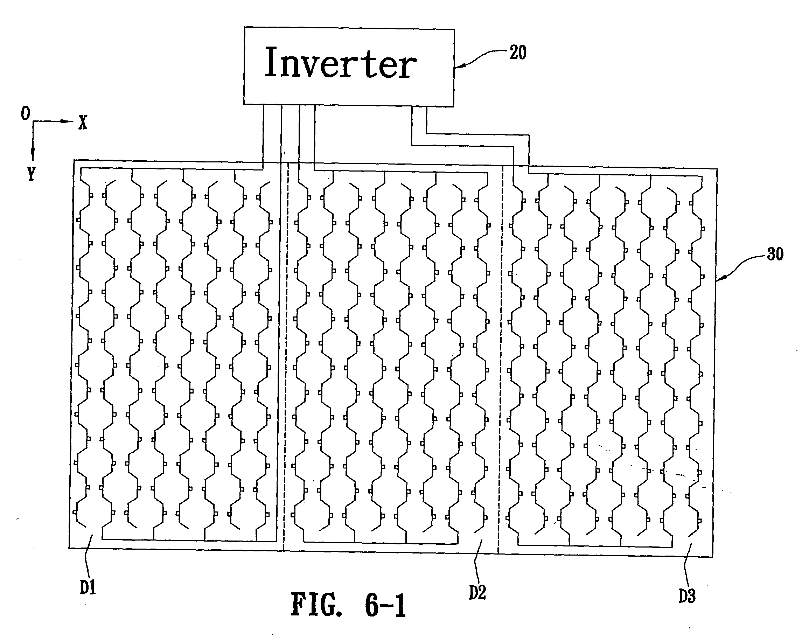

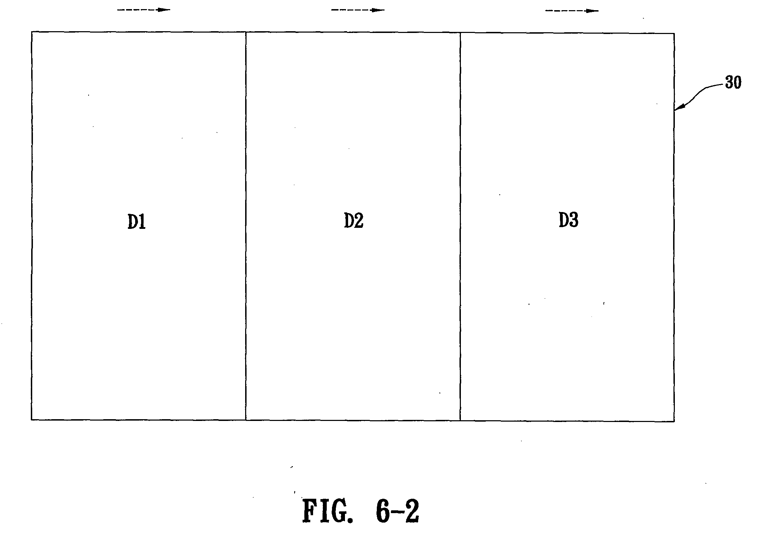

Fig. 6-1 shows the fourth preferred embodiment of the planar light source unit 10 of the invention. In this embodiment, there are several illumination regions D1~D3 from the scanning starting point O along the x-axis direction. These regions are also separately driven to illuminate by the driving unit 20, besides, according to the scanning display sequence of the LCD, the illuminating regions D1~D3 are repeatedly driven to illuminate in the sequence of D1, D2 and D3 (as in Fig. 6-2).

The above descriptions are summarized as follows. The full region illuminating method in the conventional planar light source is changed to a sequential illuminating method, in order to operate in coordination with the scanning sequence of a LCD for eliminating the shadow phenomenon. The driving unit 20 sequentially outputs electric power to drive the planar light source unit to illuminate, at the same working time the power consumed is lower than the full-region illuminating design in the conventional method, and thus the designed power of the inverter can be lowered. The sequentially illuminating method can perform an over-ride operation on each region that is separately driven to illuminate, and the illuminating brightness and efficiency are not affected too much.

While a preferred embodiment of the present invention have been described herein for the purpose of illustration, many modifications and changes will become apparent to those skilled in the art. Accordingly, the appended claims are intended to encompass all such modifications and changes as fall within the true spirit and scope of this invention.

## Claims

1. A method for driving a planar light source apparatus, used for driving a planar light source unit of a LCD backlight, comprising:
a means to allocate illuminating dots on the planar light source, dividing a planar illuminating region of the planar light source unit into several illuminating regions; and
a means to sequentially drive the illuminating dots on different illuminating regions to illuminate according to the scanning display sequence of the LCD.

2. The method for driving a planar light source apparatus of claim 1, wherein the illuminating regions are centered on a corner point of the planar illuminating region and are divided one by one in the direction facing the opposite corner, said corner point preferably being the scanning starting point.

3. The method for driving a planar light source apparatus of claim 1, wherein the illuminating regions are divided one by one near the scanning starting point of the LCD in the x-axis direction.

4. The method for driving a planar light source apparatus of claim 1, wherein the illuminating regions are divided one by one near the scanning starting point of the LCD in the y-axis direction.

5. The method for driving a planar light source apparatus of claim 1, wherein the means to sequentially drive the illuminating dots on different illuminating regions to illuminate is a driving unit for respectively driving the illuminating regions to illuminate sequentially.

6. The method for driving a planar light source apparatus of claim 5, wherein the driving unit is an inverter.

7. The method for driving a planar light source apparatus of claim 5, wherein the driving unit is an electronic control gear, ECG.

8. The method for driving a planar light source apparatus of claim 5, wherein the driving unit is electronic ballast.

9. The method for driving a planar light source apparatus of claim 1, wherein each of the illuminating regions is respectively driven to illuminate by a driving unit.

10. The method for driving a planar light source apparatus of claim 9, wherein each illuminating region comprises an electrode matrix, said electrode matrix being composed of a plurality of pairs of a positive electrode and a negative electrode in a matrix shape.

11. The method for driving a planar light source apparatus of claim 10, wherein the positive electrode of each illuminating region is connected to the driving unit together, and the negative electrode of each illuminating region is connected to the driving unit together.

12. A structure for driving a planar light source apparatus, used for driving a planar light source unit of a LCD backlight, comprising:
a planar light source unit, having illuminating dots on different illuminating regions; and
a driving unit for sequentially driving the illuminating regions to illuminate repeatedly according to the scanning display sequence of the LCD.

13. The structure for driving a planar light source apparatus of claim 12, wherein the illuminating dots are provided by LEDs.

14. The structure for driving a planar light source apparatus of claim 12, wherein the planar light source unit is a planar gas-discharging lamp.

15. The structure for driving a planar light source apparatus of claim 12, wherein the illuminating regions are centered on a corner point of the planar illuminating region and are divided one by one in the direction facing the opposite corner, said corner point preferably being the scanning starting point.

16. The structure for driving a planar light source apparatus of claim 12, wherein the illuminating regions are divided one by one near the scanning starting point of the LCD in the x-axis direction.

17. The structure for driving a planar light source apparatus of claim 12, wherein the illuminating regions are divided one by one near the scanning starting point of the LCD in the y-axis direction.

18. The structure for driving a planar light source apparatus of claim 12, further comprising a driving unit for respectively driving the illuminating regions to illuminate sequentially.

19. The structure for driving a planar light source apparatus of claim 18, wherein the driving unit is an inverter.

20. The structure for driving a planar light source apparatus of claim 18, wherein the driving unit is an electronic control gear, ECG.

21. The structure for driving a planar light source apparatus of claim 18, wherein the driving unit is electronic ballast.

22. The structure for driving a planar light source apparatus of claim 12, wherein each of the illuminating regions is respectively driven to illuminate by a driving unit.

23. The structure for driving a planar light source apparatus of claim 22, wherein each illuminating region comprises an electrode matrix, said electrode matrix being composed of a plurality of pairs of a positive electrode and a negative electrode in a matrix shape.

24. The structure for driving a planar light source apparatus of claim 23, wherein the positive electrode of each illuminating region is connected to the driving unit together, and the negative electrode of each illuminating region is connected to the driving unit together.
